(19) Europäisches Patentamt

European Patent Office

Office européen des brevets

(11) Veröffentlichungsnummer: **0 492 753 A1**

## (12) EUROPÄISCHE PATENTANMELDUNG

(21) Anmeldenummer: **91250325.7**

(22) Anmeldetag: **05.12.91**

(51) Int. Cl.⁵: **H02B 13/025**

(30) Priorität: **21.12.90 DE 4041979**

(43) Veröffentlichungstag der Anmeldung:
**01.07.92 Patentblatt 92/27**

(84) Benannte Vertragsstaaten:
**CH DE FR GB IT LI SE**

(71) Anmelder: **SIEMENS AKTIENGESELLSCHAFT**
**Wittelsbacherplatz 2**
**W-8000 München 2(DE)**

(72) Erfinder: **Poth, Rainer**
**Freiherr-vom-Stein-Strasse 2**
**W-6368 Bad Vilbel(DE)**
Erfinder: **Tafferner, Frank**
**Fritz-Erler-Strasse 15**
**W-6000 Frankfurt/Main(DE)**

(54) Vorrichtung zur Druckgasentlastung an einer metallgekapselten, druckgasisolierten Schaltanlage.

(57) Eine Vorrichtung zur Druckentlastung beim Auftreten eines Fehlers in einer metallgekapselten, druckgasisolierten Schaltanlage (1) ist im Bereich eines Flansches (10) eines Gehäuses (8) einer Baugruppe (7) angeordnet. Der Flansch (10) besitzt gegenüber den Köpfen (22) der Befestigungsschrauben (16) vergrößerte Durchgangsöffnungen (17), die durch eine Buchse (20) ausgefüllt sind. Ein scheibenartiges Zwischenstück (21, 27 31, 35) ist jeweils zwischen dem Schraubenkopf (22) und dem Flansch (10) eingelegt und überdeckt die Buchse (20). Unter dem Einfluß eines Überdruckes wird der Flansch (10) unter Verformung der Zwischenstücke (21, 27, 31, 35) von seiner Gegenfläche unter Bildung eines Ringspaltes als Austrittsöffnung für unter Druck stehende Gase abgehoben. Die beschriebene Anordnung eignet sich insbesondere zum Schutz einseitig befestiger Baugruppen von metallgekapselten, druckgasisolierten Mittelspannungs-Schaltanlagen.

FIG 3

Die Erfindung betrifft eine Vorrichtung zur Druckentlastung beim Auftreten eines Fehlers in einer Baugruppe einer metallgekapselten, druckgasisolierten Schaltanlage, wobei die Baugruppe ein eigenes, mit einem Flansch versehenes Gehäuse aufweist, das mittels einer diesen Flansch und den Flansch durchsetzende Befestigungsschrauben aufweisenden Verbindungsvorrichtung mit weiteren Komponenten der Schaltanlage verbunden ist und wobei ein gasdichter Durchführungsisolator zur Trennung der Gasräume der Baugruppe und der weiteren Komponenten vorgesehen ist.

Die Vorrichtung zur Druckentlastung ist beispielsweise für eine Schaltanlage vorgesehen, wie sie in der DE-B-28 18 905 beschrieben ist. Die Vorrichtung kann zum Beispiel die Bauart der Sicherheitseinrichtung nach der EP-B-0 120 380 oder der Berstsicherung nach der DE-A-37 43 562 aufweisen. Ferner ist eine gasisolierte Schaltanlage der vorliegenden Art mit einer Anzahl von Komponenten in der Firmendruckschrift Siemens: "Leistungsschalter-Festeinbauanlagen bis 36 kV...", Katalog HA 35.1, 1986, Bestellnummer E 86 010-K1435-A101-A3, dargestellt und beschrieben.

Die bekannten Vorrichtungen zur Druckentlastung werden üblicherweise derart verteilt über eine Schaltanlage angeordnet, daß jeder durch einen Störlichtbogen gefährdete Teil der Anlage im Störungsfall gegen ein Bersten aufgrund eines unzulässig hohen Druckes gesichert ist. Im allgemeinen ist es daher erforderlich, ebensoviele Vorrichtungen zur Druckentlastung vorzusehen, wie durch Trennwände unterteilte Gasräume in der Schaltanlage vorhanden sind.

Bei dem Ansprechen einer Vorrichtung zur Druckentlastung im Fehlerfall tritt stark erhitztes Gas aus, das je nach Art des aufgetretenen Fehlers Beimengungen von verdampftem Metall und/oder von verdampften bzw. zersetzten Isolierstoffen enthält. Zum Schutz des Bedienungspersonals müssen daher Vorkehrungen getroffen werden, um einen solchen Gasstrahl von demjenigen Bereich einer Schaltanlage fernzuhalten, in dem sich eine Bedienungsperson aufhalten kann. Dies kann entweder dadurch geschehen, daß die Vorrichtungen zur Druckentlastung an solchen Stellen einer Schaltanlage angebracht werden, an denen ein Abströmen der Gase ohne Gefahr für eine Bedienungsperson möglich ist. Andererseits können die Vorrichtungen zur Druckentlastung auch so gestaltet sein, daß die Strömungsrichtung austretender Gase in eine für das Bedienungspersonal ungefährliche Richtung umgelenkt wird.

Der Erfindung liegt hiervon ausgehend die Aufgabe zugrunde, eine Vorrichtung zur Druckentlastung mit vereinfachten Aufbau und mit zugleich verbesserter Wirkungsweise zu schaffen.

Die Erfindung löst diese Aufgabe ausgehend von einer Vorrichtung der eingangs genannten Art dadurch, daß die erwähnte Verbindungsvorrichtung mit einer definierten und im Fehlerfall durch einen inneren Überdruck überwindbaren Haltekraft ausgebildet ist und daß wenigstens ein Führungselement zur Begrenzung einer relativen Bewegung zwischen der Baugruppe und den weiteren Komponenten der Schaltanlage vorgesehen ist. Hierbei wird die ohnehin zur Verbindung von Komponenten einer Schaltanlage benötigte Verbindungsvorrichtung gleichzeitig als Vorrichtung zur Druckentlastung eingesetzt. Da die zu der Verbindungsvorrichtung gehörenden Flansche im allgemeinen einen Durchmesser entsprechend der Kapselung der Komponenten der Schaltanlage besitzen, wird im Fehlerfall ein relativ großer Durchtrittsquerschnitt für die unter Druck stehenden Gase geschaffen. Dieser Durchtrittsquerschnitt ist um ein Vielfaches größer, als ihn übliche, mit Brechmembranen oder Berstscheiben ausgerüstete Vorrichtungen zur Verfügung stellen. Dies führt zu einer verhältnismäßig geringen Strömungsgeschwindigkeit der austretenden Gase und macht es somit entbehrlich, gesonderte Einrichtungen zur Umlenkung eines Gasstrahles vorzusehen. Ferner ist anzunehmen, daß die schlagartige Freigabe eines verhältnismäßig großen Durchtrittsquerschnittes zu einer raschen Expansion der Gase und damit zu einer Abkühlung führt. Metalldampf und ionisierte Bestandteile der austretenden Gase werden deshalb schon in relativ geringer Entfernung von der geöffneten Verbindungsvorrichtung in einen weniger gefährlichen Zustand überführt.

Die Erfindung läßt sich auf verhältnismäßig einfache Weise dadurch verwirklichen, daß zwischen die Köpfe der Befestigungsschrauben der Verbindungsvorrichtung und dem Flansch des Gehäuses der Baugruppe die Haltekraft begrenzende Zwischenstücke eingefügt sind. Lediglich durch zweckmäßige Gestaltung und Auswahl solcher Zwischenstücke ist es daher möglich, die Vorrichtung zur Druckentlastung auf einen bestimmten Grenzwert des inneren Überdruckes einzurichten.

Es empfiehlt sich, anstelle von Zwischenstücken, die durch Bruch bei Überlastung zerstörbar sind, solche Zwischenstücke einzusetzen, die unter dem Einfluß des erhöhten Innendruckes der Baugruppe bleibend verformt werden. Solche Zwischenstücke können insbesondere in der Weise angeordnet werden, daß die in dem Flansch des Gehäuses der Baugruppe zum Durchtritt der Befestigungsschrauben vorgesehenen Durchgangsöffnungen einen Durchmesser besitzen, der gegenüber dem Durchmesser des Kopfes der Befestigungsschrauben wenigstens um ein solches Maß vergrößert bemessen ist, daß der Kopf unter Verformung des zugehörigen Zwischenstückes durch die Durchgangsöffnungen hindurchtreten kann.

Die Zwischenstücke können scheibenartig ausgebildet sein und können mit ihrem Rand die zugehörige Durchgangsöffnung des Flansches überdekken. Es zeigt sich somit, daß die neue Vorrichtung zur Druckentlastung mit verhältnismäßg geringen Änderungen gegenüber einer normalen Flanschverbindung an einer metallgekapselten Schaltanlage zu verwirklichen ist. Die erforderlichen Änderungen beschränken sich darauf, größere Durchgangsöffnungen in dem Flansch als bisher vorzusehen und Zwischenstücke geeigneter Beschaffenheit zu verwenden.

Für die Gestaltung der scheibenartigen Zwischenstücke gibt es eine Reihe geeigneter Möglichkeiten. Insbesondere können die Zwischenstücke einen kreisförmigen Umfang mit einem die Durchgangsöffnungen des Flansches überdeckenden Durchmesser und ausgehend von einer dem Durchmesser des Schaftes der Befestigungsschrauben entsprechenden zentralen Öffnung den Querschnitt örtlich verringernde Ausnehmungen besitzen. Durch die Größe und die Anzahl der Ausnehmungen kann die Haltekraft der Verbindungsvorrichtung bei unveränderter Dicke des Materials der scheibenartigen Zwischenstücke und unverändertem äußerem Durchmesser innerhalb gewisser Grenzen verändert werden. Es empfiehlt sich in diesem Zusammenhang, die Ausnehmungen kreisförmig auszubilden und in gleichmäßiger Teilung anzuordnen.

Bei einer anderen Ausführungsform können die Zwischenstücke sternförmig angeordnete Arme in gleichmäßiger Teilung besitzen. Auch bei dieser Gestaltung kann die gewünschte Haltekraft durch die Anzahl der Arme und ihre Gestalt beeinflußt werden.

Eine Verbesserung des Verhaltens der Vorrichtung zur Druckentlastung ist noch dadurch zu erreichen, daß der Raum zwischen dem Schaft jeder Befestigungsschraube und der Wandung der zugehörigen Durchgangsöffnung des Flansches durch ein buchsenartiges Füllstück ausgefüllt ist. Auf diese Weise können die Befestigungsschrauben in üblicher Weise festgezogen werden ohne die Ränder der Zwischenstücke bereits bei der Montage der Baugruppen und Komponenten der Schaltanlage zu verformen.

Wie bereits erwähnt, ist ein Führungselement zur Begrenzung einer relativen Bewegung zwischen der Baugruppe und der weiteren Komponenten der Schaltanlage vorgesehen. Dieses Führungselement kann wenigstens einen relativ ortsfesten, eine Durchgangsöffnung des Flansches des Gehäuses der Baugruppe durchsetzender Bolzen mit einem als Anschlag dienenden Kragen ausgebildet sein. Da sich die Vorrichtung nach der Erfindung dadurch auszeichnet, daß die im Fehlerfall auf das Gehäuse der Baugruppe wirkende Kraft durch den großen, zum Ausströmen der Gase bereitstehenden Querschnitt rasch abnimmt, braucht das Führungselement keine großen Kräfte aufzunehmen und kann daher als Schraubenbolzen oder sonstiges übliches Maschinenelement ausgebildet sein.

Die Erfindung eignet sich insbesondere für solche Baugruppen einer metallgekapselten Schaltanlage, die einseitig geschlossen sind und über nur eine Verbindungsvorrichtung mit den übrigen Komponenten in Verbindung stehen. Beispielsweise kann die Baugruppe ein induktiver Spannungswandler sein, dessen Gehäuse als nur einseitig offener und mit einem Flansch versehener Kapselungsteil ausgebildet ist. Ein solches Gehäuse kann beispielsweise mit vertikaler Längsachse auf einer Sammelschienenkapselung angeordnet sein. Bei geeigneter Ausbildung der erwähnten Führungselemente ist aber auch eine Anordnung mit horizontaler Längsachse möglich.

Die Erfindung wird im folgenden anhand der in den Figuren dargestellten Ausführungsbeispiele näher erläutert.

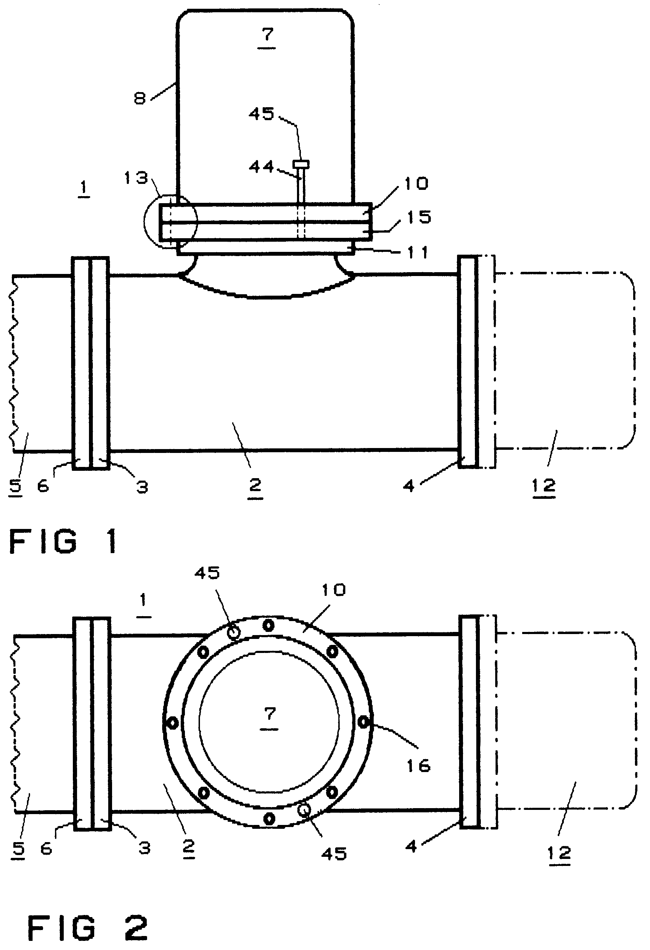

Die Figur 1 zeigt schematisch einen Teil einer metallgekapselten, druckgasisolierten Schaltanlage mit einem Spannungswandler in einer Seitenansicht.

Die Anordnung gemäß der Figur 1 ist in der Figur 2 in der Draufsicht dargestellt.

Die Figur 3 zeigt eine Einzelheit einer Verbindungsvorrichtung im Ruhezustand und in einem im Fehlerfall auftretenden verschobenen Zustand.

Die Figuren 4, 5, 6 und 7 zeigen unterschiedliche Ausführungen von scheibenartigen Zwischenstücken zur Verwendung bei einer Anordnung gemäß der Figur 3.

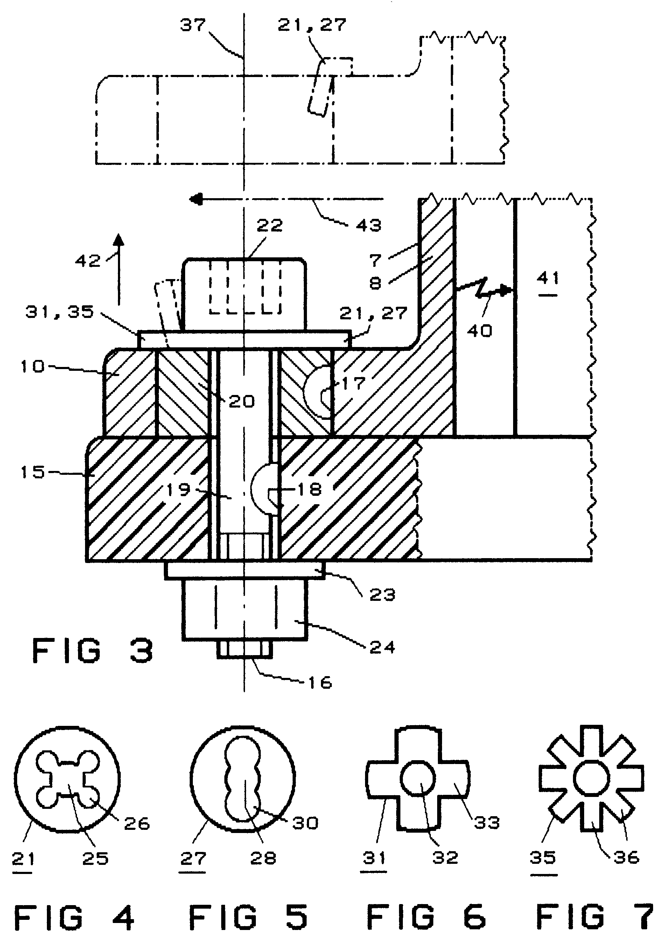

In den Figuren 1 und 2 ist schematisch ein Teil einer druckgasisolierten, metallgekapselten Schaltanlage 1 gezeigt. Als eine der Komponenten der Schaltanlage ist eine Sammelschienenkapselung 2 dargestellt, die an ihren Enden mit Flanschen 3 bzw. 4 versehen ist. Mit der Sammelschienenkapselung 2 ist eine weitere, beispielsweise ein Schaltgerat enthaltende Kapselung 5 verbunden, die gleichfalls einen Flansch 6 aufweist. Zur Spannungsmessung an der nicht gezeigten Sammelschiene dient ein induktiver Spannungswandler 7, der ein Gehäuse 8 mit einem Flansch 10 aufweist. Der Spannungswandler 7 ist mittels seines Flansches 10 an einem Flansch 11 der Sammelschienenkapselung 2 durch eine Verbindungsvorrichtung befestigt, deren Einzelheiten später anhand der Figuren 3 sowie 4 bis 7 näher beschrieben werden. Zwischen den Flanschen 10 und 11 befindet sich ein Durchführungsisolator 15. Wie den Figuren 1 und 2 noch zu entnehmen ist, könnte eine endständige Baugruppe entsprechend dem Spannungswandler 7 statt mit vertikaler Längsachse auch mit horizontaler Längsachse angeordnet sein, wie dies im rechten Teil der Figuren 1 und 2 durch die strichpunktiert gezeigte Baugruppe 12 angedeutet st.

Im folgenden wird eine Vorrichtung zur Druckentlastung beschrieben, die das Gehäuse 8 des Spannungswandlers 7 vor einem Bersten beim Auftreten eines inneren Fehlers schützt. Die Vorrichtung zur Druckentlastung ist Bestandteil einer Verbindungsvorrichtung, die im Bereich der Flansche 10 und 11 (Figur 1) angeordnet ist und von der ein Ausschnitt etwa entsorechend dem in der Figur 1 gezeigten Kreis 13 in der Figur 3 vergrößert dargestellt ist.

Wie die Figur 3 zeigt, ruht der Flansch 10 des Gehäuses 8 auf einem aus isolierendem Kunststoff bestehenden Durchführungsisolator 15, der die Gasräume der Sammelschienenkapselung 2 und des Spannungswandlers 7 voneinander trennt. Am Umfang des Flansches 10 entsprechend der Figur 2 sind eine Anzahl von Befestigungsschrauben 16 angeordnet, die je einen Kopf 22 aufweisen. Der Flansch 10 und der Durchführungsisolator 15 sind mit Durchgangsöffnungen 17 bzw. 18 versehen, durch die sich der Schaft 19 der Befestigungsschrauben 16 erstreckt. Dabei ist die Durchgangsöffnung 18 dem Durchmesser des Schaftes 19 der Schraube 16 mit üblicher Maßtoleranz angepaßt, während die Durchgangsöffnung 17 zur Aufnahme einer Buchse 20 gegenüber der Durchgangsöffnung 18 vergrößert bemessen ist. Die Höhe der Buchse 20 entspricht der Höhe des Flansches 10, so daß eine durchgehende Oberfläche zur Auflage eines scheibenförmigen Zwischenstückes gebildet ist, für das Beispiele in den Figuren 4, 5, 6 und 7 gezeigt sind. Der Flansch 10 und der Durchführungsisolator 15 werden mittels der Befestigungsschrauben 16 in der Weise gegeneinander verspannt, daß der Kopf 22 der Befestigungsschraube 16 auf dem Zwischenstück aufliegt und dieses die Buchse 20 vollständig überdeckt. Der Rand des Zwischenstückes liegt auf dem Flansch 10 auf. Dem Kopf 22 gegenüberliegend ist eine übliche Anordnung vorgesehen, die aus einer Unterlegscheibe 23 und einer Mutter 24 besteht.

Bevor auf die Wirkungsweise der in der Figur 3 gezeigten Anordnung näher eingegangen wird, werden zunächst Einzelheiten der Zwischenstücke anhand der Figuren 4, 5, 6 und 7 erläutert. Das Zwischenstück 21 gemäß der Figur 4 ist kreisförmig entsprechend einer üblichen Unterlegscheibe ausgebildet und besitzt eine zentrale Durchgangsöffnung 25 für den Schaft 19 der Befestigungsschraube 16. Ausgehend von dieser Durchgangsöffnung 25 sind vier kreisförmige Ausnehmungen 26 in gleichmäßiger Teilung angeordnet. Diese schwächen den Querschnitt des Zwischenstückes 21, um eine Biegung unter dem Einfluß eines inneren Überdruckes in dem Gehäuse 8 zu ermöglichen.

Das Zwischenstück 27 gemäß der Figur 5 besitzt bei gleicher äußerer Kontur wie das Zwischenstück 21 gleichfalls eine Zentrale Durchgangsöffnung 28, von der ausgehend jedoch nur zwei, gleichfalls etwa kreisförmige Ausnehmungen 30 ausgehen, die gleichfalls den Querschnitt und damit die Biegesteifigkeit verringern.

Das Zwischenstück 31 gemäß der Figur 6 ist etwa kreuzförmig mit einer zentralen Durchgangsöffnung 22 und vier Armen 33 mit parallelen Kanten ausgebildet.

Ein weiteres Beispiel eines Zwischenstückes 35 zeigt die Figur 7. Dieses weist insgesamt acht radiale Arme 36 auf, die gleichfalls parallele Kanten besitzen. Im Unterschied zu dem Beispiel gemäß der Figur 6 sind daher die Arme schmaler.

Im folgenden wird die Wirkungsweise der in der Figur 3 gezeigten Anordnung erläutert, wobei links einer Mittellinie 37 der Schraube 16 die Verwendung von Zwischenstücken 21 oder 27 gemäß der Figur 4 bzw. 5 und rechts der Mittellinie 37 die Verwendung von Zwischenstücken 31 oder 35 gemäß der Figur 6 bzw. 7 gezeigt ist.

Tritt in dem Gehäuse 8 ein innerer Überdruck, beispielsweise durch den mit einem Pfeil 40 angedeuteten Störlichtbogen auf, der zwischen der inneren Wandung des Gehäuses 8 und einer darin befindlichen spannungführenden Einheit 41 gezündet worden ist, so entsteht ein Überdruck, der bestrebt ist, das Gehäuse 8 von dem Durchführungsisolator 15 abzuheben. Durch eine geeignete Bemessung der jeweils benutzten Zwischenstücke 21, 27, 31 oder 35 wird erreicht, daß die Zwischenstücke 21 verformt werden. Sind Zwischenstücke 31 oder 35 (linker Teil der Figur 3) vorgesehen. so werden die Arme der Zwischenstücke hochgebogen, während der Flansch 10 in die angehobene Stellung (Pfeil 42) gelangt. Der Durchmesser der Durchgangsöffnung 17 in dem Flansch 10 ist dabei um ein solches Maß größer als der Durchmesser des Kopfes 22 der Befestigungsschraube 16 bemessen, daß der Kopf 22 mit dem verformten Zwischenstück durch die Durchgangsöffnung 17 hindurchtreten kann.

Werden dagegen Zwischenstücke 21 oder 27 gemäß der Figur 4 bzw. 5 verwendet, so werden die Zwischenstücke unter Verformung ihres inneren Randbereiches mitgenommen, der durch die Ausnehmungen 26 bzw. 30 geschwächt und daher leichter verformbar ist. Dieser Vorgang ist in der Figur 3 rechts der Mittellinie 37 veranschaulicht. Wie man erkennt, liegt das verformte Zwischenstück 21 bzw. 27 auf dem in abgehobener Stellung strichpunktiert gezeigten Flansch 10 auf. Unabhängig von der Art der Zwischenstücke entsteht am gesamten Umfang des Flansches 10 ein Ringspalt, durch den der Überdruck aus dem Gehäuse 8 entsprechend dem Pfeil 43 entweichen kann. Durch in den Figuren 1 und 2 gezeigte Führungselemente 44 wird der Weg des Flansches 10 bzw. des Gehäuses 8 nach oben begrenzt. Hierzu sind zwei an dem Rand des Durchführungsisolators 15 befestigte bolzenförmige Führungselemente 44 mit einem Kragen 45 vorgesehen.

Anstelle der diagonal gegenüberliegend angeordneten Führungselemente 44 können auch mehrere solcher Führungselemente am Umfang des Flansches 10 verteilt angeordnet sein. Durch den verhältnismäßig großen ringförmigen Durchlaßquerschnitt wird der Überdruck rasch abgebaut. Die Strömungsgeschwindigkeit der Gase ist dabei vergleichsweise gering und ungerichtet. Die Gefährdung der Umgebung ist dadurch besonders gering.

Die beschriebene Wirkungsweise ist in prinzipiell gleicher Weise mit Zwischenstücken nach den Figuren 4, 5, 6 oder 7 zu erreichen, wobei weitere Abwandlungen möglich sind. Die Auswahl des geeigneten Zwischenstückes richtet sich nach der erforderlichen Haltekraft. Eine geringere Dicke und eine größere Schwächung ergeben dabei eine geringere Haltekraft als dickere und weniger geschwächte Querschnittsformen.

**Patentansprüche**

1. Vorrichtung zur Druckentlastung beim Auftreten eines Fehlers in einer Baugruppe ( 7) einer metallgekapselten, druckgasisolierten Schaltanlage ( 1), wobei die Baugruppe ( 7) ein eigenes, mit einem Flansch (10) versehenes Gehäuse (8) aufweist, das mittels einer diesen Flansch (10) und den Flansch (10) durchsetzende Befestigungsschrauben (16) aufweisenden Verbinddungsvorrichtung mit weiteren Komponenten ( 2,5 ) der Schaltanlage ( 1) verbunden ist und wobei ein gasdichter Durchführungsisolator (15) zur Trennung der Gasräume der Baugruppe ( 7) und der weiteren Komponenten ( 2,5 ) vorgesehen ist,
   **dadurch gekennzeichnet**, daß die Verbindungsvorrichtung (16, 21, 22, 23, 24) mit einer definierten und im Fehlerfall durch einen inneren Überdruck überwindbaren Haltekraft ausgebildet ist und daß wenigstens ein Führungselement (44) zur Begrenzung einer relativen Bewegung zwischen der Baugruppe ( 7) und den weiteren Komponenten (2,5) der Schaltanlage ( 1) vorgesehen ist.

2. Vorrichtung zur Druckentlastung nach Anspruch 1,
   **dadurch gekennzeichnet**, daß zwischen die Köpfe (22) der Befestigungsschrauben (16) der Verbindungsvorrichtung (16, 21, 22, 23, 24) und dem Flansch (10) des Gehäuses ( 8) der Baugruppe ( 7) die Haltekraft begrenzende Zwischenstücke (21, 27, 31, 35) eingefügt sind.

3. Vorrichtung zur Druckentlastung nach Anspruch 2,
   **dadurch gekennzeichnet**, daß die in dem Flansch (10) des Gehäuses ( 8) der Baugruppe ( 7) zum Durchtritt der Befestigungsschrauben (16) vorgesehenen Durchgangsöffnungen (17) einen Durchmesser besitzen, der gegenüber dem Durchmesser des Kopfes (22) der Befestigungsschrauben (16) wenigstens um ein solches Maß vergrößert bemessen ist, daß der Kopf (22) unter Verformung des zugehörigen Zwischenstückes (21, 27, 31, 35) durch die Durchgangsöffnungen (17) hindurchtreten kann.

4. Vorrichtung zur Druckentlastung nach Anspruch 3,
   **dadurch gekennzeichnet**, daß die Zwischenstücke (21, 27, 31, 35) scheibenartig ausgebildet sind und mit ihrem Rand die zugehörige Durchgangsöffnung (17) des Flansches (10) überdecken.

5. Vorrichtung zur Druckentlastung nach Anspruch 4,
   **dadurch gekennzeichnet**, daß die Zwischenstücke (21, 27) einen kreisförmigen Umfang mit einem die Durchgangsöffnungen (17) des Flansches (10) überdeckenden Durchmesser und ausgehend von einer dem Durchmesser des Schaftes (19) der Befestigungsschrauben (16) entsprechenden zentralen Öffnung (25, 28) den Querschnitt örtlich verringernde Ausnehmungen (26, 30) besitzen.

6. Vorrichtung zur Druckentlastung nach Anspruch 5,
   **dadurch gekennzeichnet**, daß die Ausnehmungen (26, 30) kreisförmig ausgebildet und in gleichmäßiger Teilung angeordnet sind.

7. Vorrichtung zur Druckentlastung nach Anspruch 4,
   **dadurch gekennzeichnet**, daß die Zwischenstücke (31, 35) sternförmig angeordnete Arme (33, 36) in gleichmäßiger Teilung besitzen.

8. Vorrichtung nach einem der Ansprüche 3 bis 7,
   **dadurch gekennzeichnet**, daß der Raum zwischen dem Schaft (19) jeder Befestigungsschraube (16) und der Wandung der zugehörigen Durchgangsöffnung (17) des Flansches (10) durch ein buchsenartiges Füllstück (20) ausgefüllt ist.

9. Vorrichtung zur Druckentlastung nach einem der vorangehenden Ansprüche, **dadurch gekennzeichnet**, daß als Führungselement zur Begrenzung der Bewegung des Gehäuses ( 8) der Baugruppe ( 7) im Fehlerfall wenigstens ein relativ ortsfester, eine Durchgangsöffnung des Flansches (10) des Gehäuses ( 8) der Baugruppe ( 7) durchsetzender Bolzen (44) mit einem als Anschlag dienenden Kragen (45) vorgesehen ist.

10. Vorrichtung nach einem der vorangehenden Ansprüche, **dadurch gekennzeichnet**, daß die Baugruppe ( 7) ein induktiver Spannungswandler ist und daß das Gehäuse ( 8) der Baugruppe ( 7) als nur einseitig offener und mit einem Flansch (10) versehenes Kapselungsteil ausgebildet ist.

FIG 1

FIG 2

FIG 3

FIG 4

FIG 5

FIG 6

FIG 7

| EINSCHLÄGIGE DOKUMENTE | | | EP 91250325.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| A | DE - C - 575 959 (SACHSENWERK LICHT- UND KRAFT AG) * Spalte 1, Zeilen 6-30; insbesonders "Führung" (6) und "Hubbegrenzung" * -- | 1 | H 02 B 13/025 |
| A | DE - C - 464 729 (ALLG. ELEKTRIZITÄTS-GES.) * siehe "Führungsgleitschienen (5) und Führungszapfen (3)" * -- | 1 | |
| A | DE - C - 573 181 (SIEMENS-SCHUCKERTWERKE AG) * siehe Führungsbolzen (g) und Führungshaube für Schieber (c) * -- | 1 | |
| A | DE - A - 3 839 736 (SIEMENS AG) * Seite 4, Zeilen 8-12; Fig. 2,3 * -- | 2,4 | RECHERCHIERTE SACHGEBIETE (Int. Cl.⁵) |
| A | FR - A - 2 466 662 (MASCHINENFABRIK REINHAUSEN GEBRÜDER SCHEUBECK GMBH & CO KG) * Fig. 1-3 * -- | 2-4,8 | H 02 B F 16 K |
| A | DE - B - 2 408 263 (DORNIER SYSTEM GMBH) * Fig. * -- | 2,4,8 | |
| A | US - A - 3 804 140 (HARPER) * Fig. 6-9,10-14 * -- | 5,6,7 | |
| A | US - A - 4 193 434 (WAGNER) | 5 | |

Der vorliegende Recherchenbericht wurde für alle Patentansprüche erstellt.

| Recherchenort | Abschlußdatum der Recherche | Prüfer |
|---|---|---|
| WIEN | 11-02-1992 | ROUSSARIAN |

| Kategorie | Kennzeichnung des Dokuments mit Angabe, soweit erforderlich. der maßgeblichen Teile | Betrifft Anspruch | KLASSIFIKATION DER ANMELDUNG (Int Cl⁵) |
|---|---|---|---|
| | * Fig. 1-6 * <br> -- | | |
| A | DE - A - 2 739 030 <br> (SIEMENS AG) <br> * Gesamt * <br> ---- | | |

**EINSCHLÄGIGE DOKUMENTE**

RECHERCHIERTE SACHGEBIETE (Int. Cl⁵)

Der vorliegende Recherchenbericht wurde für alle Patentansprüche erstellt.

| Recherchenort | Abschlußdatum der Recherche | Prüfer |
|---|---|---|
| WIEN | 11-02-1992 | ROUSSARIAN |